Europäisches Patentamt

European Patent Office

Office européen des brevets

(11) Veröffentlichungsnummer: **0 490 306 A2**

# EUROPÄISCHE PATENTANMELDUNG

(21) Anmeldenummer: **91121030.0**

(22) Anmeldetag: **07.12.91**

(51) Int. Cl.5: **F24D 3/14**

(30) Priorität: **10.12.90 CH 3894/90**

(43) Veröffentlichungstag der Anmeldung:
**17.06.92 Patentblatt 92/25**

(84) Benannte Vertragsstaaten:
**AT BE DE DK FR IT NL**

(71) Anmelder: **Wisan Technik AG**
**Gubelstrasse 19**
**CH-6300 Zug(CH)**

(72) Erfinder: **Wickart, Jürg**
**Schanz 4**
**6300 Zug(CH)**

(74) Vertreter: **Blum, Rudolf Emil Ernst**
**c/o E. Blum & Co Patentanwälte Vorderberg**
**11**
**CH-8044 Zürich(CH)**

(54) **Anlage für eine Fussbodenheizung.**

(57) Bei der nachträglichen Installierung einer Fussbodenheizung muss wegen der bedingt vorhandenen, zur Verfügung stehenden Höhe zwischen Unterlage und Türschwellen eine möglichst niedere Bauhöhe für diese Heizung angestrebt werden. Weiterhin soll diese Installation, nicht wie bei einem Neubau, ohne langwieriges Austrocknen der Materialien vorsichgehen. Es soll deshalb nicht mit einem herkömmlichen Estrichüberzug gearbeitet werden. Die Rohrleitungsschlange (18) wird auf Nivellierschuhen (5) in einer horizontalen Ebene verlegt. Hierbei sind die Nivellierschuhe (5) durch Führungsrinnen (11) miteinander verbunden, und in letzteren liegt die Rohrleitungsschlange (18). Dann erfolgt eine Aufschüttung (20) mittels eines Schüttgutes, das eben und horizontal abgezogen wird. Dann werden Wärmeverteilbleche (21) in den Führungsrinnen (11) befestigt und liegen flügelartig beidseits jeder Führungsrinne (11) auf dem Schüttgut (20) auf. Dann erfolgt ein selbstnivellierender Ueberzug (26), z.B. aus einem Epoxidharz mit Füller. Die Anlage kann z.B. eine Gesamthöhe von drei Zentimeter haben.

Fig. 1

EP 0 490 306 A2

Die Erfindung betrifft eine Anlage für eine Fussbodenheizung, mit einer zum verlegen auf einer Unterlage bestimmten Rohrleitungsschlange, die in einem Schüttgut eingebettet liegt, das als Auflage einer Deckschicht dient.

Wenn man nachträglich, also in schon vorhandenen Räumen, eine Fussbodenheizung installieren will, besonders bei Altbausanierungen, sind im wesentlichen drei grosse Probleme zu beachten. Wird bei Altbauten der alte Fussboden bis zu einer Unterlage entfernt, so ist diese zur Verfügung stehende Unterlage meistens nicht eben und auch nicht genau horizontal. Weiterhin steht zwischen dieser Unterlage und den vorhandenen Türschwellen meistens nur eine geringe Bauhöhe zur Verfügung, in der die Fussbodenheizung untergebracht werden muss. Weiterhin ist die Verwendung eines selbstnivellierenden Estrichbelages wegen der langen Austrocknungszeit bei einem schon vorhandenen und meist auch während der Renovierung bewohnten Gebäudes problematisch.

Die der Erfindung zugrundeliegende Aufgabe besteht darin eine Anlage zu schaffen, mit der diese vorerwähnten Probleme gelöst werden können.

Die erfindungsgemässe Anlage ist gekennzeichnet durch eine Vielzahl von im Abstand voneinanderliegenden Nivellierschuhen, die durch Führungsrinnen miteinander in Verbindung stehen, in denen die Rohrleitungsschlange liegt, und mit Wärmeverteilblechen, die mit je einem Randbereich innerhalb einer Führungsrinne liegen und an der Wandung eines Abschnitts der Rohrleitungsschlange anliegen.

In der Zeichnung ist ein Ausführungsbeispiel des Erfindungsgegenstandes dargestellt. Es zeigen:

Figur 1 die Anlage in verschiedenen Fertigungsstadien, in schaubildlicher Darstellung, und

Figur 2 ein Detail aus der Figur 1, etwa nach einer Schnittlinie II-II, in vergrösseter Darstellung.

Ein Boden oder eine Decke in einem Gebäude hat die Wandung 1, die eine Unterlage 2 für die erfindungsgemässe Anlage bildet. Auf dieser Unterlage 2 kann sich noch eine Trittschallmatte 3 befinden, die z.B. eine Dicke von 3 mm hat. Wie schon eingangs erwähnt, kann die Unterlage 2 bei Altbauten sehr uneben sein, und zusätzlich kann die gesamte Unterlage 2 auch schräg verlaufen, also nicht horizontal liegen. Auf dieser Unterlage 2, bzw. auf der Trittschallmatte 3, werden in einem Rastersystem Distanzschienen 4 z.B. durch Aufkleben befestigt. Auf diesen Distanzschienen 4 werden nunmehr eine Vielzahl von Nivellierschuhen 5 plaziert, wobei jeder Nivellierschuh zwei Unterlagskeile 6 und einen Tragkeil 7 aufweist, wobei letzterer auf den beiden Unterlagskeilen 6 aufliegt, so dass der Abstand der beiden Unterlagskeile 6 voneinander, die Höhenlage des Tragkeils 7 bestimmt. Die beiden Unterlagskeile 6 von jedem Nivellierschuh 5 sitzen mit Klemmsitz je einer Rinne 8 auf einer gemeinsamen Distanzschiene 4. In gleicher Weise sitzt auch der Tragkeil 7 von jedem Nivellierschuh 5 mit Klemmsitz auf den beiden Unterlagskeilen. Jeder Tragkeil 7 hat eine rinnenförmige Ausnehmung 9. Jeder Tragkeil 7 hat weiterhin Befestigungsorgane 10 für einen später erläuterten Zweck.

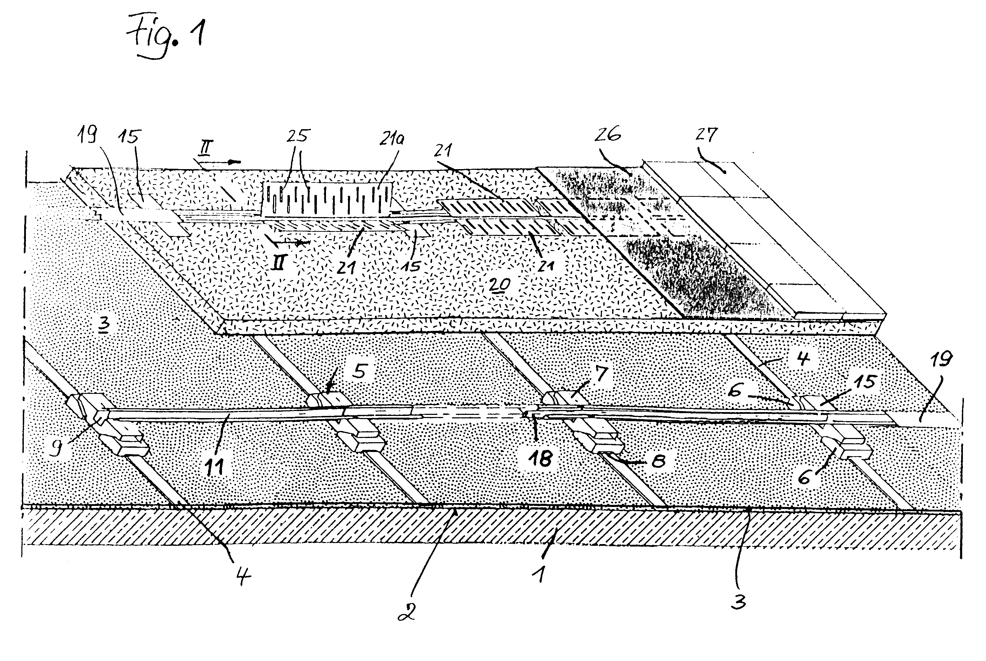

Aus Figur 1 ist ersichtlich, wie die Nivellierschuhe 5 zueinander ausgerichtet auf den Distanzschienen 4 sitzen.

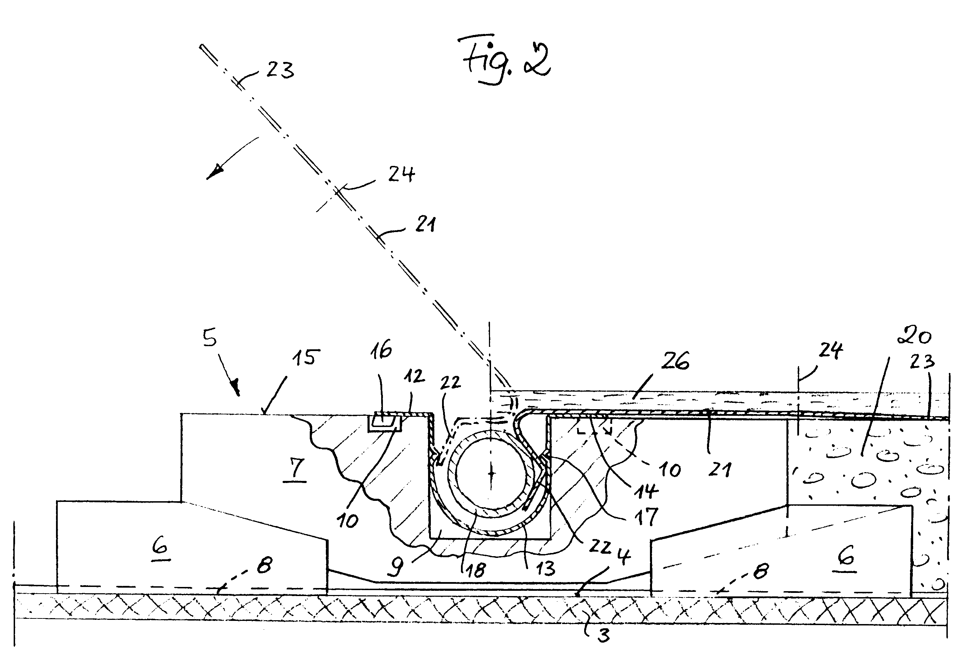

Die Anlage weist eine Vielzahl von z.B. aus Blech bestehenden Führungsrinnen 11 auf, wobei jede Führungsrinne 11 die Rasterlänge hat, also von Mitte Tragkeil 7 bis Mitte des benachbarten Tragkeils 7 reicht. Die Querschnittsform der Führungsrinne 11 ist aus Figur 2 ersichtlich, wobei dieses Querschnittsprofil die Abschnitte 12-14 aufweist. Der Abschnitt 13 liegt innerhalb der Ausnehmung 9 im Tragkeil 7, und die beiden einander identischen Schenkel 12 und 14 liegen auf der oberen Seite 15 des Tragkeils 7 auf. In je einem Tragkeil 7 können zwei hintereinanderliegende Führungsrinnen 11 mit ihren beiden Endbereichen aufliegen, wobei dann mit einem vertikal bewegbaren, nicht dargestellten Drückwerkzeug ein lappenartiger Teil 16 der erwähnten Endbereiche nach unten in das als Vertiefung ausgebildete Befestigungsorgan 10 eingedrückt werden kann, damit jede Führungsrinne 11 gegenüber den Tragkeilen 7 und damit gegenüber den Nivellierschuhen 5 nicht mehr axial verschoben werden kann. Aus Figur 2 ist ersichtlich, dass der innerhalb der Ausnehmung 9 des Tragkeiles 7 liegende Abschnitt 13 der Führungsrinne 11 mit zwei einander gegenüberliegenden Hintergreifnocken 17 versehen ist, deren Zweck später erläutert wird.

Sind die Führungsrinnen 11 nach Figur 1 in die Nivellierschuhe 5 eingelegt und darinnen mittels der Organe 10 und 16 axial festgelegt worden, wird die Rohrleitungsschlange verlegt, d.h. die die Rohrleitungsschlange bildende Rohrleitung 18 wird in die Führungsrinnen 11 gelegt und liegt dann an der Innenwandung des Abschnitts 13 der Führungsrinnen 11 an.

Da mit den Nivellierschuhen 5 eine unebene oder gar nicht horizontal liegende Unterlage 1 bzw. 3 ausgeglichen werden soll, muss die Oberseite 15 aller in einem Raum befindlichen Nivellierschuhe 5 "ins Wasser gestellt" werden. Ob letzteres vor dem Einlegen der Führungsrinnen 11 in die Ausnehmungen 9 oder erst nach dem Einlegen der Rohrleitungsschlange 18 in die Führungsrinnen 11 erfolgt, muss sich in der Praxis zeigen.

Nach dem Einlegen der Rohrleitungsschlange 18 in die Führungsrinnen 11 müssen sich die Oberseiten 15 aller Nivellierschuhe 5 innerhalb einer horizontalen Ebene befinden. Nunmehr werden die oben offenen Führungsrinnen 11 mit einem Klebeband 19 abgedeckt, wie in Figur 1 an zwei Stellen angedeutet ist, so dass also die Führungsrinnen 11 oben verschlossen sind. Nunmehr erfolgt das Einbringen des Schüttgutes 20. Dieses liegt als Schüttgut vor, das mit einem schnellaushärtendem Bindemittel versetzt ist, und kann z.B. aus einem Schaumglasgranulat bestehen und dient zugleich als thermische Isolation nach unten. Dieses Schüttgut 20 füllt also den Raum zwischen der Trittschallmatte 3 und der Oberseite 15 der Nivellierschuhe 5 aus. Diese Oberseiten 15 aller Nivellierschuhe 5 ergibt hierbei das Nivelliermass beim Abziehen der Oberfläche des Schüttguts 20, so dass diese Oberfläche bündig ist mit der Oberseite 15 und damit ebenfalls genau horizontal liegt. Ist das Schüttgut 20 in eine horizontale Lage abgezogen worden, werden die vorerwähnten Klebebänder 19 von den Führungsrinnen 11 abgezogen, so dass diese nach oben offen sind, wie Figur 1 in der oberen Hälfte der Darstellung zeigt. Neben den offenen Führungsrinnen sieht man auch noch die mit dem Schüttgut 20 ebene Oberseite 15 der Nivellierschuhe.

Nunmehr werden Wärmeverteilbleche 21 in die Führungsrinnen 11 eingelegt. In Figur 2 ist auf der rechten Seite ein Wärmeverteilblech 21 bereits eingelegt und liegt auf dem Schüttgut 20 auf. In Figur 2, auf der linken Seite, ist gezeigt, wie ein solches Wärmeverteilblech 21 in die Führungsrinne 11 eingelegt wird. In der Praxis wird man zwei Wärmeverteilbleche 21 gleichzeitig in eine Führungsrinne 11 einlegen, so dass sie sich dann nach dem Verlegen flügelartig beidseits derselben Führungsrinne 11 erstrecken. Aus Figur 2 ist dann zu erkennen, dass jeweils zwei Wärmeverteilbleche 21 mit ihren Randbereichen 22 in ein und derserlben Führungsrinne 11 liegen und an der Wandung desselben Abschnitts der Rohrleitungsschlange 18 anliegen. Aus Figur 2 ist bei einem verlegten Wärmeverteilblech 21 ersichtlich, wie sein Randbereich 22 mit dem Hintergreifnocken 17 der Führungsrinne 11 zum Bilden einer Schnappverriegelung zusammenwirkt, und zwar derart, dass das freie Ende 23 des Wärmeverteilbleches 21 leicht angedrückt auf dem Schüttgut 20 aufliegt. Um dieses zu erreichen, kann es noch von Vorteil sein, wenn jedes Wärmeverteilblech 21 entlang einer zum Randbereich 22 parallelen Biegekante 24 das Schüttgut 20 überdachend bombiert ist, wie aus Figur 2 ersichtlich ist. Aus Figur 1 ist ersichtlich, dass jedes Wärmeverteilblech 21 mit mehreren Durchbrechungen 25 versehen ist.

Sind die Wärmeverteilbleche 21 in der erläuterten Weise verlegt worden, wobei die erwähnte Schnappverriegelung zwischen Randbereich 22 und Hintergreifnocken 17 sowie die erwähnte Bombierung dazu dienen, dass alle Wärmeverteilbleche 21 ohne Verwerfungen am abgezogenen Schüttgut 20 anliegen, so liegt die Rohrleitungsschlange 18 in der aus Figur 2 ersichtlichen Lage, wird also von den beiden Randbereichen 22 innerhalb der Führungsrinne 11 angehoben gehalten, so dass also die Randbereiche 22 für eine gute Wärmeübertragung durch Wärmeleitung sorgen.

Nunmehr wird eine selbstnivellierende Deckschicht 26 aufgebracht, die z.B. aus einer schnellhärtenden Masse besteht, wobei dieses Material durch die Durchbrechungen 25 in den Wärmeverteilblechen 21 hindurch bis zur Oberfläche des Schüttguts 20 dringt, so dass eine formschlüssige Verbindung zwischen Deckschicht 26, Wärmeverteilblech 21 und Schüttgut 20 vorhanden ist. Selbstverständlich muss die Zähflüssigkeit des Deckschicht-Materials so eingestellt werden, dass dieses Material nur bis zur Oberfläche des Schüttguts 20 vordringt. Die fertig ausgehärtete Deckschicht 26 kann z.B. eine Dicke von 3 mm haben. Beim Aufbringen dieser Deckschicht 26 sind dann auch noch die oben offenen Bereiche der Führungsrinnen 11 im selben Arbeitsgang ausgegossen worden. Die Wärmeverteilbleche 21 liegen also zwischen der Deckschicht 26 und dem Schüttgut 20. Auf der Deckschicht 26, die nunmehr genau horizontal liegt, kann nunmehr irgend ein gewünschter Fertigbelag 27 aufgebracht werden. Die gesamte Dicke der Anlage, also einschliesslich der Trittschallmatte 3 und der Deckschicht 26 kann z.B. 30 mm betragen.

Durch die Verlegung der Wärmeverteilbleche 21 wird eine sehr gute Wärmeverteilung von der Rohrleitungsschlange 18 auf den Fertigbelag 27 erreicht. Die erläuterte Anlage kann Zug um Zug verlegt, d.h. eingebaut werden, ohne dass längere Unterbrüche notwendig werden.

Zur vorerwähnten Verlegeweise der Anlage kann noch eine Variante vorgesehen werden, wobei die Wärmeverteilbleche 21 in einer aufgestellten Lage 21a in die Führungsrinne 11 eingesetzt, also noch nicht mittels der Schnappverriegelung 17, 22 verriegelt werden, worauf dann das Schüttgut 20 eingebracht und auf das Niveau der Oberseite 15 abgezogen wird, worauf dann die Wärmeverteilbleche 21 nacheinander flügelartig ausgebreitet und auf das Schüttgut 20 gelegt werden, wobei die Schnappverriegelung zwischen den Bauteilen 17 und 22 erfolgt.

**Patentansprüche**

1. Anlage für eine Fussbodenheizung, mit einer zum Verlegen auf einer Unterlage (1,3) bestimmten Rohrleitungsschlange (18), die in einem Schüttgut (20) eingebettet liegt, das als Auflage einer Deckschicht (26) dient, gekennzeichnet durch eine Vielzahl von im Abstand voneinander liegenden Nivellierschuhen (5), die durch Führungsrinnen (11) miteinander in Verbindung stehen, in denen die Rohrleitungsschlange (18) liegt, und mit Wärmeverteilblechen (21), die mit je einem Randbereich (22) innerhalb einer Führungsrinne (11) liegen und an der Wandung eines Abschnitts der Rohrleitungsschlange (18) anliegen.

2. Anlage nach Anspruch 1, dadurch gekennzeichnet, dass die Wärmeverteilbleche (21) zwischen der Deckschicht (26) und dem Schüttgut (20) liegen.

3. Anlage nach Anspruch 1 oder 2, dadurch gekennzeichnet, dass jeweils zwei Wärmeverteilbleche (21) mit ihren Randbereichen (22) in ein und derselben Führungsrinne (11) liegen und an der Wandung desselben Abschnitts der Rohrleitungsschlange (18) anliegen, wobei sich die beiden Wärmeverteilbleche (21) flügelartig beidseits derselben Führungsrinne (11) erstrecken.

4. Anlage nach Anspruch 1, gekennzeichnet durch Distanzschienen (4), die dazu bestimmt sind, auf der Unterlage (1,3) befestigt zu werden, wobei die Nivellierschuhe (5) auf ihrer Unterseite mit Klemmrinnen (8) für die Distanzschienen (4) versehen sind.

5. Anlage nach Anspruch 1, dadurch gekennzeichnet, dass jeder Nivellierschuh (5) zwei Unterlagskeile (6) und einen Tragkeil (7) aufweist, wobei letzterer auf den beiden Unterlagskeilen (6) aufliegt, so dass der Abstand der beiden Unterlagskeile (6) voneinander, die Höhenlage des Tragkeils (7) bestimmt.

6. Anlage nach Anspruch 5, dadurch gekennzeichnet, dass der Tragkeil (7) mit Klemmsitz auf den beiden Unterlagskeilen (6) aufliegt.

7. Anlage nach Anspruch 5 oder 6, dadurch gekennzeichnet, dass der Tragkeil (7) eine Ausnehmung (9) zur Aufnahme von zwei hintereinanderliegenden Führungsrinnen (11) aufweist, und dass der Tragkeil (7) weiterhin mit Befestigungsorganen (10) zum Befestigen dieser beiden Führungsrinnen (11) an ihm, versehen ist.

8. Anlage nach Anspruch 1, dadurch gekennzeichnet, dass jedes Wärmeverteilblech (21) mit mehreren Durchbrechungen (25) versehen ist, die dazu bestimmt sind, dass die Deckschicht (26) durch die Durchbrechungen (25) hindurch zum Schüttgut (20) gelangt.

9. Anlage nach Anspruch 2, dadurch gekennzeichnet, dass die Führungsrinnen (11) innen mit Hintergreifnocken (17) zum Zusammenwirken mit den Randbereichen (22) der Wärmeverteilbleche (21) versehen sind, zum Bilden einer Schnappverriegelung zwischen Führungsrinne (11) und auf dem Schüttgut (20) aufliegendem Wärmeverteilblech (21).

10. Anlage nach Anspruch 9, dadurch gekennzeichnet, dass jedes Wärmeverteilblech (21) entlang einer zum Randbereich (22) parallelen Biegekante (24) das Schüttgut (20) überdachend bombiert ist.

Fig. 1

EP 0 490 306 A2

Fig. 2

EP 0 490 306 A2